# EUROPEAN PATENT APPLICATION

(11) **EP 4 807 156 A1**
(43) Date of publication of application: **16.09.2026**
(21) Application number: 26165193.9
(22) Date of filing: 16.03.2026
(51) Int. Cl.: F02C 3/10, B64D 31/18, F02C 6/20, F02K 5/00

(54) **AIRCRAFT PROPULSION SYSTEM WITH POWER TURBINE ELECTRIC MACHINE**

(30) Priority: 14.03.2025 US 202519080188
(71) Applicant: RTX Corporation, Farmington, CT 06032 (US)
(72) Inventor: MORTON, Jeffrey T., Glastonbury, 06033 (US); COOMBES, Melissa, Bellingham, 98229-2583 (US)
(74) Representative: Dehns

(57) **Abstract**

An aircraft system is provided that includes an open propulsor rotor, a turbine engine and a power turbine electric machine. The turbine engine includes a core compressor section, a core combustor section, a core turbine section, a power turbine section, a flowpath, a first core rotating structure and a power turbine rotating structure. The first core rotating structure includes a first core compressor rotor and a first core turbine rotor. The first core compressor rotor is disposed in the core compressor section. The first core turbine rotor is disposed in the core turbine section. The power turbine rotating structure is configured to drive rotation of the open propulsor rotor. The power turbine rotating structure includes a power turbine rotor disposed in the power turbine section. The power turbine electric machine is operatively coupled to the power turbine rotating structure.

## Description

### BACKGROUND OF THE DISCLOSURE

### 1. Technical Field

This disclosure relates generally to an aircraft and, more particularly, to propulsion system(s) for the aircraft.

### 2. Background Information

Various types and configurations of aircraft propulsion systems are known in the art, including those with one or more open propulsor rotors and those with one or more electric machines. Various methods are also known in the art for operating these known aircraft propulsion systems. While the known aircraft propulsion systems and methods for operating those aircraft propulsion systems have various benefits, there is still room in the art for improvement.

### SUMMARY OF THE DISCLOSURE

According to an aspect of the present disclosure, an aircraft system is provided that includes an open propulsor rotor, a turbine engine, a power turbine electric machine, a first core electric machine and an electrical system. The turbine engine includes a core compressor section, a core combustor section, a core turbine section, a power turbine section, a flowpath, a first core rotating structure and a power turbine rotating structure. The flowpath extends through the core compressor section, the core combustor section, the core turbine section and the power turbine section from an inlet into the flowpath to an exhaust from the flowpath. The first core rotating structure includes a first core compressor rotor and a first core turbine rotor. The first core compressor rotor is disposed in the core compressor section. The first core turbine rotor is disposed in the core turbine section. The power turbine rotating structure is configured to drive rotation of the open propulsor rotor. The power turbine rotating structure includes a power turbine rotor disposed in the power turbine section. The power turbine electric machine is operatively coupled to the power turbine rotating structure. The first core electric machine is operatively coupled to the first core rotating structure. The electrical system is electrically coupled to and configured to transfer electrical power between the power turbine electric machine and the first core electric machine.

According to another aspect of the present disclosure, another aircraft system is provided that includes an open propulsor rotor, a turbine engine and a power turbine electric machine. The turbine engine includes a core compressor section, a core combustor section, a core turbine section, a power turbine section, a flowpath, a first core rotating structure, a second core rotating structure and a power turbine rotating structure. The flowpath extends through the core compressor section, the core combustor section, the core turbine section and the power turbine section from an inlet into the flowpath to an exhaust from the flowpath. The first core rotating structure includes a first core compressor rotor and a first core turbine rotor. The first core compressor rotor is disposed in the core compressor section. The first core turbine rotor is disposed in the core turbine section. The second core rotating structure includes a second core compressor rotor and a second core turbine rotor. The second core compressor rotor is disposed in the core compressor section. The first core turbine rotor is disposed in the core turbine section. The power turbine rotating structure is configured to drive rotation of the open propulsor rotor. The power turbine rotating structure includes a power turbine rotor disposed in the power turbine section. The power turbine electric machine is operatively coupled to the power turbine rotating structure.

According to still another aspect of the present disclosure, another aircraft system is provided that includes an open propulsor rotor, an open guide vane structure, a turbine engine and a power turbine electric machine. The open guide vane structure is next to the open propulsor rotor. The turbine engine includes a core compressor section, a core combustor section, a core turbine section, a power turbine section, a flowpath, a first core rotating structure and a power turbine rotating structure. The flowpath extends through the core compressor section, the core combustor section, the core turbine section and the power turbine section from an inlet into the flowpath to an exhaust from the flowpath. The first core rotating structure includes a first core compressor rotor and a first core turbine rotor. The first core compressor rotor is disposed in the core compressor section. The first core turbine rotor is disposed in the core turbine section. The power turbine rotating structure is configured to drive rotation of the open propulsor rotor. The power turbine rotating structure includes a power turbine rotor disposed in the power turbine section. The power turbine electric machine is operatively coupled to the power turbine rotating structure.

The following optional features may be applied to any of the above aspects.

The open guide vane structure may be downstream of the open propulsor rotor.

The aircraft system may also include an aircraft propulsion system. This aircraft propulsion system may also include at least the open propulsor rotor and the turbine engine. The open propulsor rotor may be disposed between a forward end of the aircraft propulsion system and the turbine engine.

The power turbine electric machine may be configured as a motor-generator.

The aircraft system may also include a core electric machine and an electrical system. The core electric machine may be operatively coupled to the first core rotating structure or the second core rotating structure. The electrical system may be electrically coupled to and may be configured to transfer electrical power between the power turbine electric machine and the core electric machine.

During at least one mode of operation: the power turbine electric machine may be configured as an electric generator; the first core electric machine may be configured as an electric motor operable to provide mechanical power to the first core rotating structure; and the electrical system may be configured to transfer the electrical power from the electric generator to the electric motor.

During at least one mode of operation: the power turbine electric machine may be configured as an electric motor configured to provide mechanical power to the open propulsor rotor; the first core electric machine may be configured as an electric generator; and the electrical system may be configured to transfer the electrical power from the electric generator to the electric motor.

The turbine engine may also include a second core rotating structure. The second core rotating structure may include a second core compressor rotor and a second core turbine rotor. The second core compressor rotor may be disposed in the core compressor section. The second core turbine rotor may be disposed in the core turbine section.

The second core compressor rotor may be disposed between the first core compressor rotor and the core combustor section along the flowpath. In addition or alternatively, the second core turbine rotor may be disposed between the first core turbine rotor and the core combustor section along the flowpath.

The first core compressor rotor may be disposed between the second core compressor rotor and the core combustor section along the flowpath. In addition or alternatively, the first core turbine rotor may be disposed between the second core turbine rotor and the core combustor section along the flowpath.

The aircraft system may also include a second core electric machine operatively coupled to the second core rotating structure. The electrical system may be electrically coupled to the second core electric machine. The electrical system may also be configured to transfer additional electrical power between at least one of: the power turbine electric machine and the second core electric machine; or the first core electric machine and the second core electric machine.

The second core electric machine may be configurable as at least one of an electric motor and an electric generator.

The aircraft system may also include a clutch configured to selectively operatively couple the power turbine electric machine and the power turbine rotating structure.

The aircraft system may also include a clutch configured to selectively operatively couple the first core electric machine and the first core rotating structure.

The open propulsor rotor may be rotatable about an axis. The power turbine rotor may be located axially between the open propulsor rotor and the first core turbine rotor along the axis.

The open propulsor rotor may be rotatable about an axis. The first core turbine rotor may be located axially between the open propulsor rotor and the power turbine rotor along the axis.

The open propulsor rotor may be coaxial with the power turbine rotor.

The open propulsor rotor may be coaxial with the first core turbine rotor.

The open propulsor rotor may be rotatable about a propulsor axis. The first core turbine rotor may be rotatable about a core axis that is angularly offset from the propulsor axis.

The open propulsor rotor may be rotatable about a propulsor axis. The first core turbine rotor may be rotatable about a core axis that is laterally offset from the propulsor axis.

The aircraft system may also include an open guide vane structure axially next to the open propulsor rotor.

The aircraft system may also include a geartrain operatively coupling the power turbine rotor to the open propulsor rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft with multiple propulsion systems mounted to wings of the aircraft.
FIG. 2 is a schematic illustration of the aircraft with its propulsion systems mounted to a fuselage of the aircraft.
FIG. 3 is a schematic illustration of an exemplary one of the propulsion systems.
FIG. 4 is a schematic illustration of a forward portion of the propulsion system of FIG. 3.
FIG. 5 is a schematic illustration of a portion of an exemplary one of the propulsion systems with an electric machine system electrically coupled to an aircraft electrical system.
FIG. 6 is a schematic illustration of the propulsion systems with sensor systems, a control system and a display.
FIG. 7 is a flow diagram of an operating method.
FIG. 8 is a partial schematic illustration depicting assembly of first and second aircraft propulsion systems.
FIGS. 9-12 are partial schematic illustrations of a propulsion system with various other engine core arrangements.
FIGS. 13 and 14 are partial schematic illustrations of a propulsion system with various arrangements of remotely located engine cores.

### DETAILED DESCRIPTION

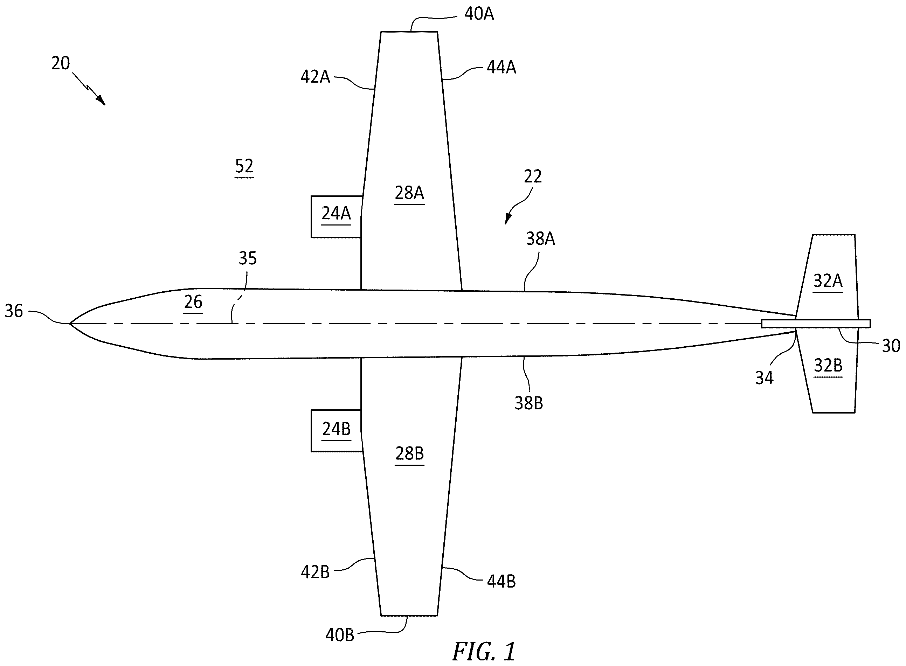

FIG. 1 is a schematic illustration of an aircraft 20. This aircraft 20 may be an airplane, a drone (e.g., an unmanned aerial vehicle (UAV)), or any other manned or unmanned aerial vehicle or system. The aircraft 20 includes an aircraft airframe 22 and one or more aircraft propulsion systems 24A and 24B (generally referred to as "24"); e.g., a pair of companion aircraft propulsion systems.

The aircraft airframe 22 of FIG. 1 includes an aircraft fuselage 26 and one or more aircraft wings 28A and 28B (generally referred to as "28"). This aircraft airframe 22 may also include one or more aircraft stabilizers, such as at least one vertical stabilizer 30 and one or more horizontal stabilizers 32A and 32B (generally referred to as "32") arranged at (e.g., on, adjacent or proximate) an aft, downstream tail end 34 of the aircraft fuselage 26. However, in other embodiments, it is contemplated one or more of the aircraft stabilizers 30, 32A and/or 32B may be omitted where, for example, the aircraft 20 is alternatively configured as a blended wing body aircraft.

The aircraft fuselage 26 extends longitudinally along a longitudinal centerline 35 of the aircraft airframe 22 and its aircraft fuselage 26 from a forward, upstream nose end 36 of the aircraft airframe 22 and its aircraft fuselage 26 to the fuselage tail end 34. The aircraft fuselage 26 extends laterally between and to opposing lateral sides 38A and 38B (generally referred to as "38") of the aircraft fuselage 26.

The aircraft wings 28A and 28B are arranged to the opposing lateral sides 38A and 38B of the aircraft fuselage 26. The first aircraft wing 28A of FIG. 1, for example, is connected to the aircraft fuselage 26 at the fuselage first side 38A. The second aircraft wing 28B is connected to the aircraft fuselage 26 at the fuselage second side 38B. The aircraft fuselage 26 of FIG. 1 is thereby located laterally between the first aircraft wing 28A and the second aircraft wing 28B. Each of these aircraft wings 28A and 28B projects spanwise out from the aircraft fuselage 26 to a tip 40A, 40B of the respective aircraft wing 28A, 28B. Each of the aircraft wings 28A and 28B extends longitudinally between and to a leading edge 42A, 42B of the respective aircraft wing 28A, 28B and a trailing edge 44A, 44B of the respective aircraft wing 28A, 28B.

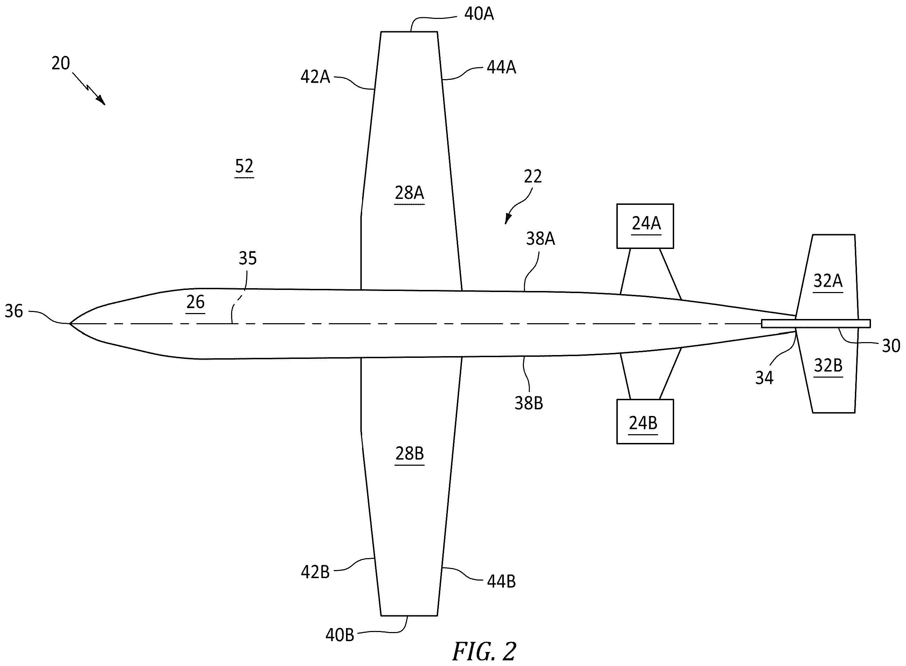

The aircraft propulsion systems 24A and 24B of FIG. 1 are arranged to the opposing lateral sides 38A and 38B of the aircraft fuselage 26. The first aircraft propulsion system 24A of FIG. 1, for example, is mounted to the first aircraft wing 28A. The second aircraft propulsion system 24B is mounted to the second aircraft wing 28B. The aircraft fuselage 26 of FIG. 1 is thereby located laterally between the first aircraft propulsion system 24A and the second aircraft propulsion system 24B. The present disclosure, however, is not limited to such an exemplary arrangement. For example, referring to FIG. 2, the first aircraft propulsion system 24A may alternatively be mounted to the aircraft fuselage 26 at the fuselage first side 38A. The second aircraft propulsion system 24B may alternatively be mounted to the aircraft fuselage 26 at the fuselage second side 38B.

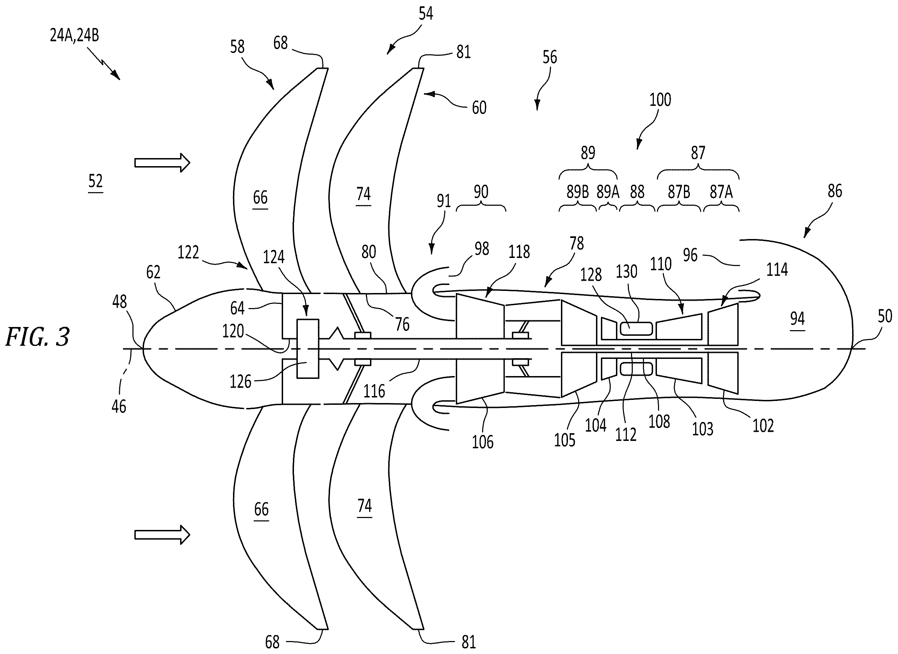

FIG. 3 illustrates an exemplary one of the aircraft propulsion systems 24. This aircraft propulsion system 24 of FIG. 3 extends axially along an axis 46 between an upstream, forward end 48 of the aircraft propulsion system 24 and a downstream, aft end 50 of the aircraft propulsion system 24. The propulsion system axis 46 may be a centerline axis of the respective aircraft propulsion system 24 and/or a centerline axis of one or more members of the respective aircraft propulsion system 24. The propulsion system axis 46 may also or alternatively be a rotational axis of one or more members of the respective aircraft propulsion system 24.

The aircraft propulsion system 24 of FIG. 3 may be configured as an open rotor propulsion system with a single open rotor and swirl recovery vane (SRV) architecture. Herein, the term "open" may describe a propulsion system section and/or a propulsion system component which is open to an environment 52 (e.g., an ambient environment) external to the aircraft propulsion system 24 and, more generally, the aircraft 20 (see FIGS. 1 and 2). The aircraft propulsion system 24 of FIG. 3, for example, includes an open rotor propulsion section 54 and a gas turbine engine 56.

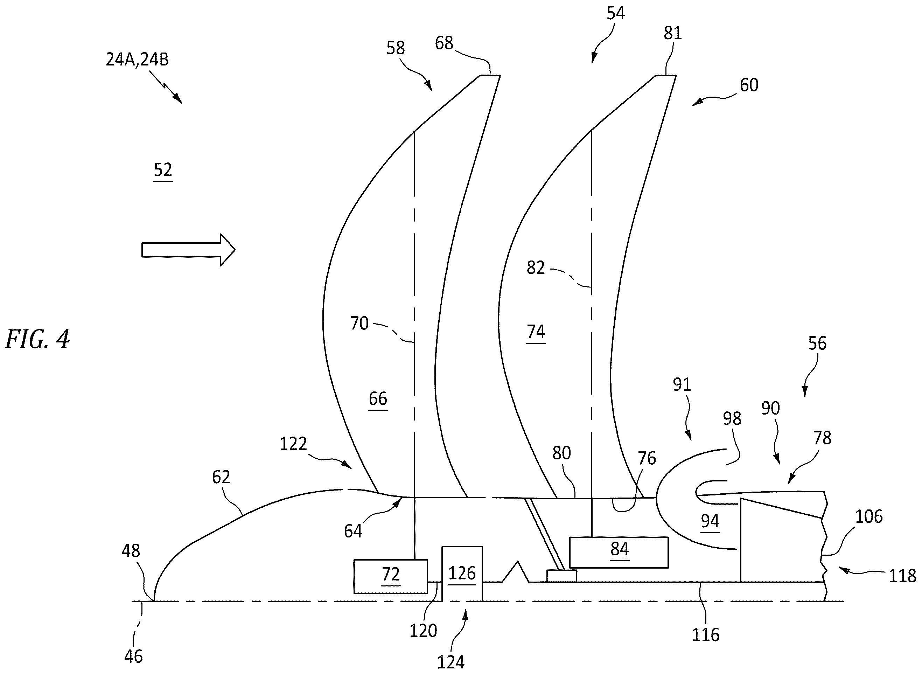

Referring to FIG. 4, the propulsion section 54 includes an open propulsor rotor 58 and an open guide vane structure 60. These propulsion section members 58 and 60 are un-ducted components of the aircraft propulsion system 24 and its propulsion section 54. The propulsion section 54 of FIG. 4 also includes a nose cone 62 disposed at (e.g., on, adjacent or proximate) the propulsion system forward end 48. Briefly, this nose cone 62 may be configured as a spinner which is rotatable with the propulsor rotor 58 about the propulsion system axis 46. Alternatively, the nose cone 62 may be configured as a stationary structure of the propulsion section 54.

The propulsor rotor 58 includes a rotor base 64 (e.g., a disk or a hub) and a plurality of open propulsor blades 66 (e.g., airfoils). The propulsor blades 66 are arranged and may be equispaced circumferentially about the rotor base 64 and the propulsion system axis 46 in an array; e.g., a circular array. This array of the propulsor blades 66 may be unshrouded or alternatively shrouded by a tubular propulsor rotor shroud dedicated to the propulsor rotor 58 for example. Each of the propulsor blades 66 is connected to (e.g., formed integral with or otherwise attached to) the rotor base 64. Each of the propulsor blades 66 projects spanwise along a span line of the respective propulsor blade 66 (e.g., radially relative to the propulsion system axis 46) out from an exterior surface of the rotor base 64, into the external environment 52, to an unshrouded distal tip 68 of the respective propulsor blade 66. Here, the exterior surface radially borders the external environment 52 and forms an inner platform surface of the propulsor rotor 58. Each propulsor blade 66 is thereby configured as an un-ducted propulsor blade which is exposed to (e.g., disposed in) the surrounding external environment 52.

Each propulsor blade 66 may be configured to pivot about a respective blade pivot axis 70. This blade pivot axis 70 extends generally radially relative to the propulsion system axis 46. Each propulsor blade 66 of FIG. 4 is operatively coupled with a blade actuation system 72. This blade actuation system 72 is configured to pivot each propulsor blade 66 about its respective blade pivot axis 70. By pivoting each propulsor blade 66 about its blade pivot axis 70, a pitch of the respective propulsor blade 66 may be changed. Of course, it is contemplated some or all of the propulsor blades 66 may be alternatively moved to change the propulsor blade pitch and/or another propulsor blade parameter such as blade camber. Moreover, it is contemplated some or all of the propulsor blades 66 may alternatively be fixed position propulsor blades in other embodiments.

The guide vane structure 60 of FIG. 4 includes a plurality of open exit guide vanes 74; e.g., airfoils. These guide vanes 74 are arranged and may be equispaced circumferentially about the propulsion system axis 46 in an array; e.g., a circular array. This array of the guide vanes 74 may be unshrouded or alternatively shrouded by a tubular guide vane shroud dedicated to the guide vane structure 60 for example. The guide vane structure 60 and its guide vanes 74 are arranged axially next to (e.g., adjacent) the propulsor rotor 58 and its propulsor blades 66. The guide vane structure 60 and its guide vanes 74 of FIG. 4, for example, are arranged downstream of the propulsor rotor 58 and its propulsor blades 66, without (e.g., any) other elements axially therebetween to obstruct, turn and/or otherwise influence the air propelled by the propulsor rotor 58 to the guide vane structure 60 for example. Each of the guide vanes 74 of FIG. 4 is coupled to a support structure 76 of a stationary housing structure 78 for the aircraft propulsion system 24. This support structure 76 may be configured as or otherwise include a support frame, a case and/or another fixed structure of the housing structure 78. Each of the guide vanes 74 projects spanwise along a span line of the respective guide vane 74 (e.g., radially relative to the propulsion system axis 46) out from an exterior surface 80 of the housing structure 78, into the external environment 52, to a distal tip 81 of the respective guide vane 74. Here, the exterior surface 80 radially borders the external environment 52 and forms an exterior aerodynamic flow surface of the aircraft propulsion system 24. Each guide vane 74 illustrated in FIG. 4 is thereby configured as an un-ducted guide vane 74 which is exposed to (e.g., disposed in) the surrounding external environment 52.

Each guide vane 74 may be configured to pivot about a respective vane pivot axis 82. This vane pivot axis 82 extends generally radially relative to the propulsion system axis 46. Each guide vane 74 of FIG. 4 is operatively coupled with a vane actuation system 84. The vane actuation system 84 may be discrete from or integrated as part of the blade actuation system 72. The vane actuation system 84 is configured to pivot each guide vane 74 about its respective vane pivot axis 82. By pivoting each guide vane 74 about its vane pivot axis 82, a pitch of the respective guide vane 74 may be changed. Of course, it is contemplated some or all of the guide vanes 74 may be alternatively moved to change the guide vane pitch and/or another guide vane parameter such as vane camber. Moreover, it is contemplated some or all of the guide vanes 74 may alternatively be fixed position guide vanes in other embodiments.

Referring to FIG. 3, the turbine engine 56 includes an inlet section 86, a core compressor section 87, a core combustor section 88, a core turbine section 89, a power turbine (PT) section 90 and an exhaust section 91. The core compressor section 87 of FIG. 3 includes a low pressure compressor (LPC) section 87A and a high pressure compressor (HPC) section 87B. The core turbine section 89 of FIG. 3 includes a high pressure turbine (HPT) section 89A and an intermediate pressure turbine (IPT) section 89B, where the PT section 90 is a low pressure turbine (LPT) section of the turbine engine 56. The turbine engine 56 also includes an (e.g., annular) engine flowpath 94 which extends longitudinally through the aircraft propulsion system 24 of FIG. 3 and its turbine engine 56 from an airflow inlet 96 into the engine flowpath 94 to a combustion products exhaust 98 from the engine flowpath 94. The flowpath inlet 96 is also an airflow inlet into the aircraft propulsion system 24 of FIG. 3 and its turbine engine 56. The flowpath exhaust 98 is also a combustion products exhaust from the aircraft propulsion system 24 of FIG. 3 and its turbine engine 56. At least (or only) the LPC section 87A, the HPC section 87B, the combustor section 88, the HPT section 89A and the IPT section 89B collectively form a core 100 (e.g., a gas generator) of the turbine engine 56.

The LPC section 87A includes a bladed low pressure compressor (LPC) rotor 102. The HPC section 87B includes a bladed high pressure compressor (HPC) rotor 103. The HPT section 89A includes a bladed high pressure turbine (HPT) rotor 104. The IPT section 89B includes a bladed intermediate pressure turbine (IPT) rotor 105. The PT section 90 includes a bladed power turbine (PT) rotor 106. Each of these engine rotors 102-106 includes a rotor base (e.g., a disk or a hub) and a plurality of rotor blades (e.g., airfoils, vanes, etc.). The rotor blades are arranged and may be equispaced circumferentially around the respective rotor base in an array. The rotor blades may also be arranged into one or more stages longitudinally along the engine flowpath 94. Each of the rotor blades is connected to the respective rotor base. Each of the rotor blades projects radially (e.g., spanwise) out from the respective rotor base into the engine flowpath 94 and to a distal tip of the respective rotor blade.

The HPC rotor 103 is coupled to and rotatable with the HPT rotor 104. The HPC rotor 103 of FIG. 3, for example, is connected to the HPT rotor 104 by a high speed shaft 108. At least (or only) the HPC rotor 103, the HPT rotor 104 and the high speed shaft 108 collectively form a high speed rotating structure 110; e.g., a high speed spool of the turbine engine 56 and its engine core 100. This high speed rotating structure 110 of FIG. 3 and its members 103, 104 and 108 are rotatable about the propulsion system axis 46. However, in other embodiments, the high speed rotating structure 110 may alternatively be rotatable about another rotational axis which is (e.g., laterally and/or angularly) offset from the rotational axis of the propulsor rotor 58.

The LPC rotor 102 is coupled to and rotatable with the IPT rotor 105. The LPC rotor 102 of FIG. 3, for example, is connected to the IPT rotor 105 by a low speed shaft 112. At least (or only) the LPC rotor 102, the IPT rotor 105 and the low speed shaft 112 collectively form a low speed rotating structure 114; e.g., a low speed spool of the turbine engine 56 and its engine core 100. This low speed rotating structure 114 of FIG. 3 and its members 102, 105 and 112 are rotatable about the propulsion system axis 46. However, in other embodiments, the low speed rotating structure 114 may alternatively be rotatable about another rotational axis which is (e.g., laterally and/or angularly) offset from the rotational axis of the propulsor rotor 58.

The PT rotor 106 (e.g., the LPT rotor) is connected to and rotatable with a power turbine shaft 116. At least (or only) the PT rotor 106 and the power turbine shaft 116 collectively form a power turbine rotating structure 118. This power turbine rotating structure 118 of FIG. 3 and its members 106 and 116 are rotatable about the propulsion system axis 46. However, in other embodiments, the power turbine rotating structure 118 may alternatively be rotatable about another rotational axis which is (e.g., laterally and/or angularly) offset from the rotational axis of the propulsor rotor 58.

The propulsor rotor 58 is connected to and rotatable with a propulsor shaft 120. At least (or only) the propulsor rotor 58 and the propulsor shaft 120 collectively form a propulsor rotating structure 122. This propulsor rotating structure 122 of FIG. 3 and its members 58 and 120 are rotatable about the propulsion system axis 46.

The power turbine rotating structure 118 is coupled to the propulsor rotating structure 122 through a drivetrain 124. This drivetrain 124 may be configured as a geared drivetrain, where a geartrain 126 (e.g., a transmission, a speed change device, an epicyclic geartrain, etc.) is disposed between and operatively couples the propulsor rotating structure 122 and its propulsor rotor 58 to the power turbine rotating structure 118 and its PT rotor 106. With this arrangement, the propulsor rotating structure 122 and its propulsor rotor 58 may rotate at a different (e.g., slower) rotational speed than the power turbine rotating structure 118 and its PT rotor 106. Here, the propulsor rotating structure 122 and the power turbine rotating structure 118 may rotate in a common (the same) rotational direction about the propulsion system axis 46 or in opposite directions about the propulsion system axis 46 depending, for example, upon the specific configuration of the geartrain 126. Alternatively, the drivetrain 124 may be configured as a direct-drive drivetrain, where the geartrain 126 is omitted. With such an arrangement, the propulsor rotating structure 122 and its propulsor rotor 58 rotate at a common (the same) rotational speed as the power turbine rotating structure 118 and its PT rotor 106.

The engine sections 86-91 may be housed within and/or formed by the housing structure 78. This housing structure 78 includes an engine case and a nacelle. The engine case houses one or more of the engine sections 87A-89B (and/or 90); e.g., the engine core 100 and/or the PT section 90. The engine case, for example, may extend axially along (e.g., axially overlaps) and extend circumferentially about (e.g., circumscribes) the engine sections 87A-90 and the bladed rotors 102-106. The engine case may also house the geartrain 126. The nacelle houses and provides an aerodynamic cover over the engine case. An exterior wall of the nacelle, for example, may be disposed radially outboard of, extend axially along (e.g., axially overlaps) and extend circumferentially about (e.g., circumscribes) the engine core 100, the PT section 90 and the engine case. This nacelle wall may at least partially or completely form the exterior surface 80. With the foregoing arrangement, the bladed rotors 102-106 are disposed within the housing structure 78. By contrast, the propulsor rotor 58 and the guide vane structure 60 are disposed at least partially (or completely) outside of the housing structure 78.

The LPC section 87A, the HPC section 87B, the combustor section 88, the HPT section 89A, the IPT section 89B, the PT section 90 and the propulsion section 54 may be arranged sequentially along the propulsion system axis 46 between the propulsion system aft end 50 and the propulsion system forward end 48. The inlet section 86 of FIG. 3 is disposed at or near the propulsion system aft end 50. The exhaust section 91 of FIG. 3 is disposed near the propulsion system forward end 48, for example axially between (a) the PT section 90 and/or the engine core 100 and (b) propulsion section 54 and/or the propulsor rotor 58. With this reverse flow arrangement, the HPT section 89A, the IPT section 89B, the PT section 90 and the exhaust section 91 may be arranged axially along the propulsion system axis 46 between (a) one or more of the engine sections 86-88 and (b) the propulsor rotor 58. The HPT section 89A, the IPT section 89B and optionally the PT section 90 may be arranged axially along the propulsion system axis 46 between (a) the combustor section 88 and (b) the propulsion section 54 and its propulsion section members 58 and 120. The PT section 90 may be arranged axially along the propulsion system axis 46 between (a) the engine core 100 and (b) the propulsor rotor 58 and, more generally, the entire propulsion section 54. The engine core 100 and the PT section 90 may each be arranged axially along the propulsion system axis 46 between (a) the inlet section 86 and/or the propulsion system aft end 50 and (b) the propulsor rotor 58 and, more generally, the entire propulsion section 54.

During operation of the aircraft propulsion system 24 of FIG. 3, ambient air within the external environment 52 is propelled by the rotating propulsor rotor 58 in the downstream, aft direction towards the propulsion system aft end 50. A major portion (e.g., more than 50%) of this air bypasses the turbine engine 56 to provide forward thrust while a minor portion (e.g., less than 50%) of the air flows into the turbine engine 56. For example, an outer stream of the air propelled by the rotating propulsor rotor 58 flows axially across the guide vane structure 60 and outside of the housing structure 78 and its exterior surface 80; e.g., along an exterior of the nacelle. The guide vane structure 60 conditions (e.g., straightens out, de-swirls, etc.) the outer stream of air within the external environment 52 to enhance the forward thrust. By contrast, an inner stream of the air propelled by the rotating propulsor rotor 58 may also flow across the guide vane structure 60 and then enter the turbine engine 56 and its engine flowpath 94 through the flowpath inlet 96. The air entering the engine flowpath 94 through the flowpath inlet 96 may be referred to as "core air".

The core air is compressed by the LPC rotor 102 and the HPC rotor 103 and directed into a combustion chamber 128 (e.g., an annular combustion chamber) of a combustor 130 (e.g., an annular combustor) in the combustor section 88. Fuel is injected into the combustion chamber 128 by one or more fuel injectors and mixed with the compressed core air to provide a fuel-air mixture. This fuel-air mixture is ignited and combustion products thereof flow through and sequentially drive rotation of the HPT rotor 104, the IPT rotor 105 and the PT rotor 106. The rotation of the HPT rotor 104 and the IPT rotor 105 respectively drive rotation of the HPC rotor 103 and the LPC rotor 102 and, thus, compression of the core air. The rotation of the PT rotor 106 drives the rotation of the propulsor rotor 58 through the drivetrain 124 and its geartrain 126. The turbine engine 56 and its power turbine rotating structure 118 thereby power operation of (e.g., drive rotation of) the propulsor rotor 58 during aircraft propulsion system operation.

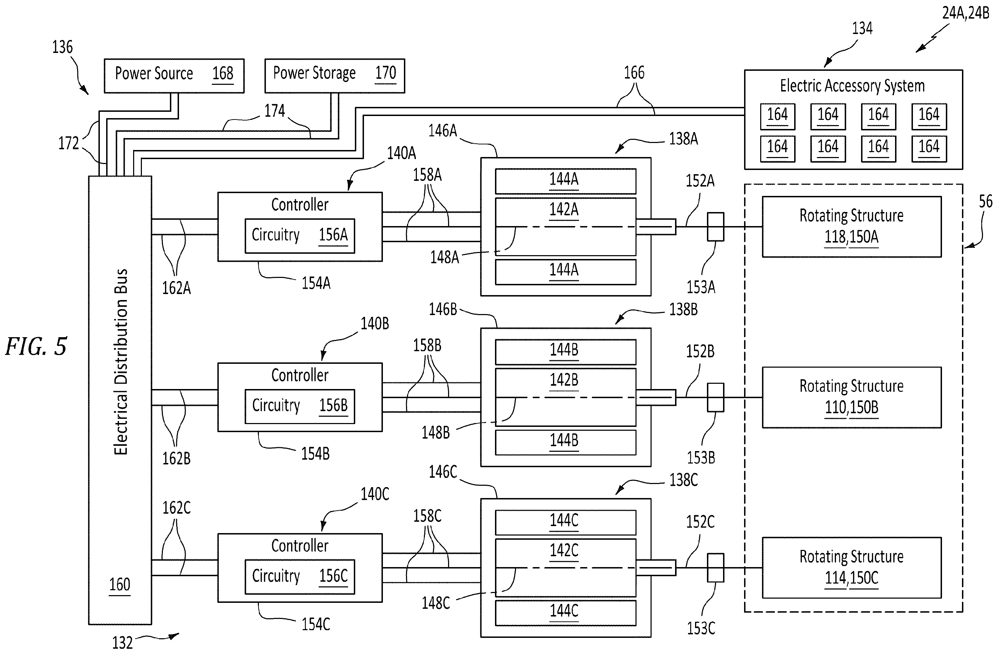

Referring to FIG. 5, each aircraft propulsion system 24 includes an electric machine system 132 electrically coupled to an optional electric accessory system 134 and an electrical system 136 for the aircraft and its aircraft propulsion system(s) 24 (see FIGS. 1 and 2). The electric machine system 132 of FIG. 5 includes one or more electric machines 138A-C (generally referred to as "138") and one or more electric machine (EM) controllers 140A-C (generally referred to as "140"). For ease of description, each electric machine 138 of FIG. 5 is described below as being electrically coupled to, controlled by and/or otherwise associated with a single, dedicated EM controller 140. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with a single electric machine.

Each electric machine 138A-C of FIG. 5 includes an electric machine rotor 142A-C (generally referred to as "142"), an electric machine stator 144A-C (generally referred to as "144") and an electric machine housing 146A-C (generally referred to as "146"); e.g., a case. The machine rotor 142A-C is rotatable about a rotational axis 148A-C (generally referred to as "148") of the respective machine rotor 142A-C, which electric machine (EM) axis 148 may also be a centerline axis of the respective electric machine 138. The machine stator 144 of FIG. 5 is radially outboard of and circumscribes the machine rotor 142. With this arrangement, each electric machine 138 is configured as a radial flux electric machine. The electric machines 138 of the present disclosure, however, are not limited to such an exemplary rotor-stator configuration nor to radial flux arrangements. The machine rotor 142, for example, may alternatively be radially outboard of and circumscribe the machine stator 144. In another example, the machine rotor 142 may be axially next to the machine stator 144 configuring the electric machine 138 as an axial flux electric machine. Referring again to FIG. 5, the machine rotor 142 and the machine stator 144 are at least partially or completely housed within an interior of the machine housing 146.

Each electric machine 138A-C may be operatively coupled to a respective engine rotating structure 150A-C (generally referred to as "150"). The first engine rotating structure 150A may be configured as or otherwise include the power turbine rotating structure 118. The second engine rotating structure 150B may be configured as or otherwise include the high speed rotating structure 110. The third engine rotating structure 150C may be configured as or otherwise include the low speed rotating structure 114. Each machine rotor 142 of FIG. 5 may be mechanically coupled to and rotatable with the respective engine rotating structure 150 through an engine-electric machine drivetrain 152A-C (generally referred to as "152"). This engine-electric machine drivetrain 152 may be configured as or otherwise include a shaft, a tower shaft assembly, an accessory gearbox, an angle gearbox, and/or the like. Any one or more of the engine-electric machine drivetrains 152A-C may (or may not) also include a clutch 153A-C (generally referred to as "153"), which clutch 153 is configured to selectively couple or decouple the respective engine rotating structure 150 and the respective machine rotor 142. Alternatively, it is contemplated the machine rotor 142 may be integrated as part of or directly connected to the engine rotating structure 150. For ease of description, each machine rotor 142 of FIG. 5 is described below as being coupled to and rotatable with a unique one of the engine rotating structures 150 of the turbine engine 56. However, it is contemplated multiple machine rotors may alternatively be coupled to and rotatable with a common engine rotating structure. It is also contemplated a single one of the machine rotors may be coupled to and rotatable with multiple engine rotating structures, directly or through another device such as a differential or a clutch system. In addition, while the electric machines 138 are described above as being coupled to the engine rotating structures 150, it is contemplated the machine rotor 142 of one or more of the electric machines 138 may also or alternatively be operatively coupled to another rotating device through the engine-electric machine drivetrain 152 such as, but not limited to, a pump rotor, an auxiliary compressor rotor, an actuator rotor, or the like.

Each electric machine 138 of FIG. 5 may be configurable as an electric motor and/or an electric generator; e.g., an electric motor-generator. For example, during a respective motor mode of operation, each electric machine 138 may operate as the electric motor to convert electricity received from the aircraft electrical system 136 into mechanical power. The machine stator 144, for example, may generate an electromagnetic field with the machine rotor 142 using a current of electricity received from the aircraft electrical system 136 through the respective EM controller 140. This electromagnetic field may drive rotation of the machine rotor 142. The machine rotor 142, in turn, may provide mechanical power to and drive rotation of the respective engine rotating structure 150 through the respective engine-electric machine drivetrain 152. This mechanical power may be provided to boost power or completely power the rotation of the respective engine rotating structure 150. By contrast, during a respective generator mode of operation, each electric machine 138 may operate as the electric generator to convert mechanical power received from the respective engine rotating structure 150 into electricity. Rotation of the machine rotor 142, for example, may be rotationally driven by rotation of the respective engine rotating structure 150 through the engine-electric machine drivetrain 152. The rotation of the machine rotor 142 may generate an electromagnetic field with the machine stator 144, and the machine stator 144 may convert energy from the electromagnetic field into electricity. The electric machine 138 may then provide a current of electricity to the aircraft electrical system 136 through the respective EM controller 140 for storage and/or further use. The electric machines 138 of the present disclosure, however, are not limited to such exemplary operation. For example, one or more of the electric machines 138 may each alternatively be configured as a dedicated electric generator; e.g., without the electric motor functionality. In another example, one or more of the electric machines 138 may each alternatively be configured as a dedicated electric motor; e.g., without the electric generator functionality.

Each EM controller 140A-C includes a controller housing 154A-C (generally referred to as "154") and internal controller circuitry 156A-C (generally referred to as "156"). The controller housing 154 may be configured as an enclosed case (e.g., a closed or sealed container) for the respective controller circuitry 156. The controller circuitry 156 is disposed within an interior of the respective controller housing 154; e.g., an internal chamber or other volume(s) within and enclosed by the controller housing 154. The controller circuitry 156 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 140A-C is electrically coupled to the respective electric machine 138A-C through one or more electric cables 158A-C (generally referred to as " 158"); e.g., high voltage electric cables, power feeder cables, etc. More particularly, the controller circuitry 156 of each EM controller 140 is electrically coupled to the respective electric machine 138 and its machine stator 144 through the respective electric cables 158. Similarly, each EM controller 140A-C is electrically coupled to an electrical distribution bus 160 of the aircraft electrical system 136 through one or more electric cables 162A-C (generally referred to as "162"); e.g., high voltage electric cables, power feeder cables, etc. More particularly, the controller circuitry 156 of each EM controller 140 is electrically coupled to the aircraft electrical system 136 and its electrical distribution bus 160 through the respective electric cables 162.

Each EM controller 140 and its controller circuitry 156 are configured to control operation of the respective electric machine 138. For example, when operating as the electric motor, each EM controller 140 and its controller circuitry 156 are configured to regulate a flow of electricity from the aircraft electrical system 136 to the respective electric machine 138. This electricity flow regulation may include: (a) turning-on the flow of electricity from the aircraft electrical system 136 to the respective electric machine 138 (e.g., electrically coupling the respective electric machine 138 to the aircraft electrical system 136); (b) turning-off the flow of electricity from the aircraft electrical system 136 to the respective electric machine 138 (e.g., electrically decoupling the respective electric machine 138 from the aircraft electrical system 136); (c) moderating the flow of electricity from the aircraft electrical system 136 to the respective electric machine 138. Here, each EM controller 140 operates as a motor controller. In another example, when operating as the electric generator, each EM controller 140 and its controller circuitry 156 are configured to regulate a flow of electricity from the respective electric machine 138 to the aircraft electrical system 136. This electricity flow regulation may include: (a) turning-on the flow of electricity from the respective electric machine 138 to the aircraft electrical system 136 (e.g., electrically coupling the respective electric machine 138 to the aircraft electrical system 136); (b) turning-off the flow of electricity from the respective electric machine 138 to the aircraft electrical system 136 (e.g., electrically decoupling the respective electric machine 138 from the aircraft electrical system 136); (c) moderating the flow of electricity from the respective electric machine 138 to the aircraft electrical system 136. Here, the EM controller 140 operates as a generator controller.

The electric accessory system 134 includes one or more electric devices 164. The electric devices 164 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 164 of FIG. 5 may be configured as part of one or more sub-systems for the respective aircraft propulsion system 24 and its turbine engine 56. Examples of these sub-systems include, but are not limited to: a fuel system for delivering the fuel to the fuel injectors; a lubrication system for delivering lubricant (e.g., oil) to one or more lubricated components (e.g., bearing(s), gear system(s), seal system(s), etc.) of the respective aircraft propulsion system 24 and its turbine engine 56; a cooling system for delivering coolant (e.g., liquid coolant, air, etc.) to one or more fluid cooled components of the respective aircraft propulsion system 24 and its turbine engine 56; and an actuation system for moving one or more adjustable components (e.g., variable guide vanes, a variable area nozzle, etc.) of the respective aircraft propulsion system 24 and its turbine engine 56. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices 164.

Each electric device 164 is electrically coupled to the electrical distribution bus 160 of the aircraft electrical system 136 through one or more electric cables 166 (collectively schematically shown); e.g., high voltage electric cables, low voltage electric cables, power feeder cables, etc. Each electric device 164 may thereby receive a current of electricity from the aircraft electrical system 136 to power operation thereof.

The aircraft electrical system 136 includes the electrical distribution bus 160. This aircraft electrical system 136 may also include a power source 168 and/or a power storage 170. The electrical distribution bus 160 is electrically coupled to each electric machine 138 through the respective EM controller 140. The electrical distribution bus 160 is electrically coupled to each of the electric devices 164. The electrical distribution bus 160 is also electrically coupled to the power source 168 and the power storage 170, respectively through one or more electric cables 172, 174; e.g., high voltage electric cables, power feeder cables, etc. With this arrangement, the electrical distribution bus 160 provides an intermediate connection between the various electrical aircraft propulsion system members 138A (via 140A), 138B (via 140B), 138C (via 140C), 164, 168 and/or 170. The power source 168 may be an electric generator powered by the turbine engine 56 or an electric generator powered by another aircraft powerplant; e.g., an engine of a companion aircraft propulsion system, an engine of an auxiliary power unit (APU), a fuel cell system, etc. The power storage 170 is configured to receive electricity from the electrical distribution bus 160 for storage. The power storage 170 is also configured to provide the stored electricity to the electrical distribution bus 160. The power storage 170, for example, may be configured as or otherwise include one or more electricity storage devices; e.g., batteries, super capacitors, etc.

With the foregoing aircraft electrical system arrangement, the electrical current provided to one, some or all of the electric devices 164 may be received, through the electrical distribution bus 160, from any one, some or all of the electrical aircraft propulsion system members 138A, 138B, 138C, 168 and/or 170. In addition, the electrical current provided to any one or more of the electric machines 138 may be received from another one or more of the electric machines 138 through the aircraft electrical system 136 and its electrical distribution bus 160. For example, when the power turbine (PT) electric machine 138A is operating as the electric motor, the PT electric machine 138A may receive electricity generated by the low speed electric machine 138C and/or the high speed electric machine 138B through the aircraft electrical system 136 where those electric machines 138B and 138C are operating as the electric generators. In another example, when the PT electric machine 138A is operating as the electric generator, the PT electric machine 138A may provide its generated electricity to the low speed electric machine 138C and/or the high speed electric machine 138B through the aircraft electrical system 136 where those electric machines 138B and 138C are operating as the electric motors. In another example, when the low speed electric machine 138C is operating as the electric motor, the low speed electric machine 138C may receive electricity generated by the PT electric machine 138A and/or the high speed electric machine 138B through the aircraft electrical system 136 where those electric machines 138A and 138B are operating as the electric generators. In still another example, when the high speed electric machine 138B is operating as the electric motor, the high speed electric machine 138B may receive electricity generated by the PT electric machine 138A and/or the low speed electric machine 138C through the aircraft electrical system 136 where those electric machines 138A and 138C are operating as the electric generators. The aircraft electrical system 136 may thereby be utilized to facilitate inter-rotating structure power transfer.

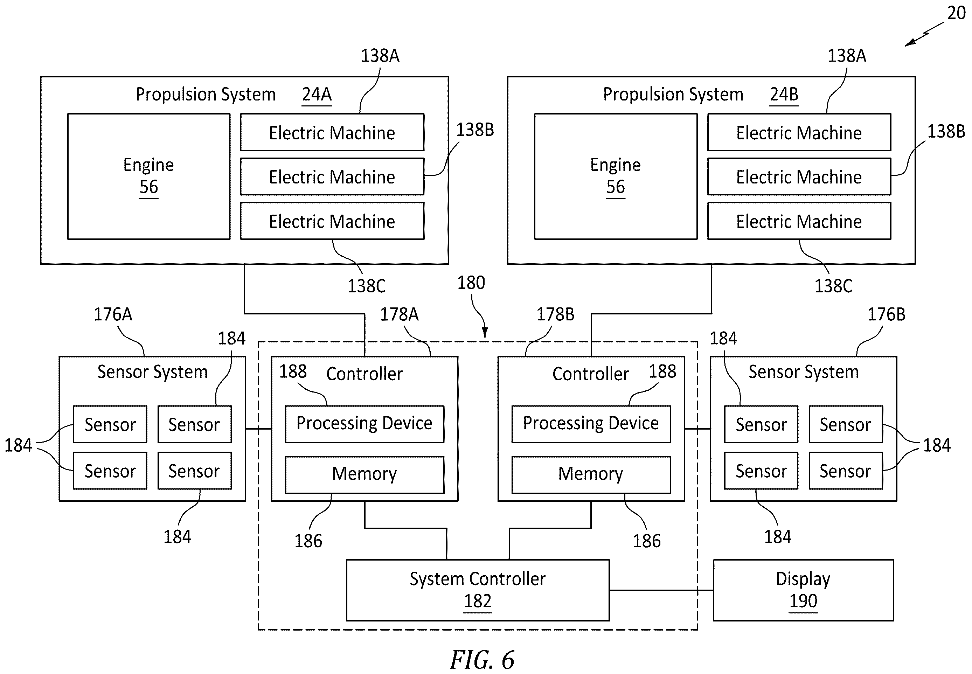

Referring to FIG. 6, each aircraft propulsion system 24A, 24B may be provided with a sensor system 176A, 176B (generally referred to as "176") and a controller 178A, 178B (generally referred to as "178"). Each sensor system 176 and each controller 178 of FIG. 6 is dedicated to a respective one of the aircraft propulsion systems 24. However, the first controller 178A and the second controller 178B may be included as part of a control system 180 which synchronizes propulsion system operation. This control system 180 may include a system controller 182 to coordinate synchronized and/or complimentary operation of the first aircraft propulsion system 24A and the second aircraft propulsion system 24B. Alternatively, the first controller 178A may be in signal communication (e.g., hardwired and/or wirelessly coupled) with the second controller 178B to provide the synchronized and/or complimentary operation of the first aircraft propulsion system 24A and the second aircraft propulsion system 24B. Still alternatively, the first controller 178A and the second controller 178B may be combined into a single multi-propulsion system controller. However, for ease of description, the aircraft propulsion systems 24 are described below with the control system 180 of FIG. 6.

Each sensor system 176 is configured to monitor operation of the respective aircraft propulsion system 24. More particularly, each sensor system 176 is configured to monitor operation of the turbine engine 56 in the respective aircraft propulsion system 24. Each sensor system 176, for example, includes one or more sensors 184 attached to, integrated into and/or otherwise arranged with the respective aircraft propulsion system 24 and its turbine engine 56. Examples of these sensors 184 include, but are not limited to, one or more temperature sensors, one or more pressure sensors and/or one or more speed sensors. The temperature sensor(s) may be configured to monitor a gas temperature of the core air and/or the combustion products flowing in the engine flowpath 94 (see FIG. 3). The pressure sensor(s) may be configured to monitor a gas pressure of the core air and/or the combustion products flowing in the engine flowpath 94 (see FIG. 3). The speed sensor(s) may be configured to monitor a rotational speed of one or more of the rotating structures 110, 114, 118 and/or 122 (see FIG. 3).

Each controller 178 is in signal communication with the respective sensor system 176 and its sensors 184. Each controller 178 is also in signal communication with the respective aircraft propulsion system 24 and one or more of its members 56, 138A (via 140A of FIG. 5), 138B (via 140B of FIG. 5) and 138C (via 140C of FIG. 5). Each controller 178 may be configured as an onboard propulsion system controller; e.g., an electronic engine controller (EEC), an electronic control unit (ECU), a full-authority digital engine controller (FADEC), etc. Each controller 178 may be implemented with a combination of hardware and software. The hardware may include memory 186 and at least one processing device 188, which processing device 188 may include one or more single-core and/or multicore processors. The hardware may also or alternatively include analog and/or digital circuitry other than that described above.

The memory 186 is configured to store software (e.g., program instructions) for execution by the processing device 188, which software execution may control and/or facilitate performance of one or more operations such as those described below. The memory 186 may be a non-transitory computer readable medium. For example, the memory 186 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

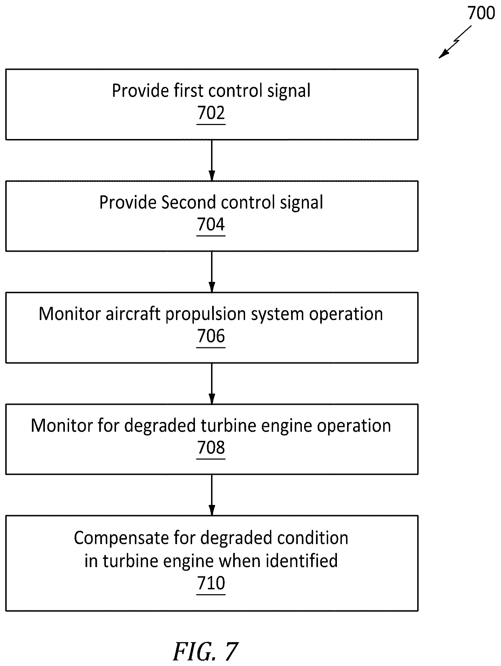

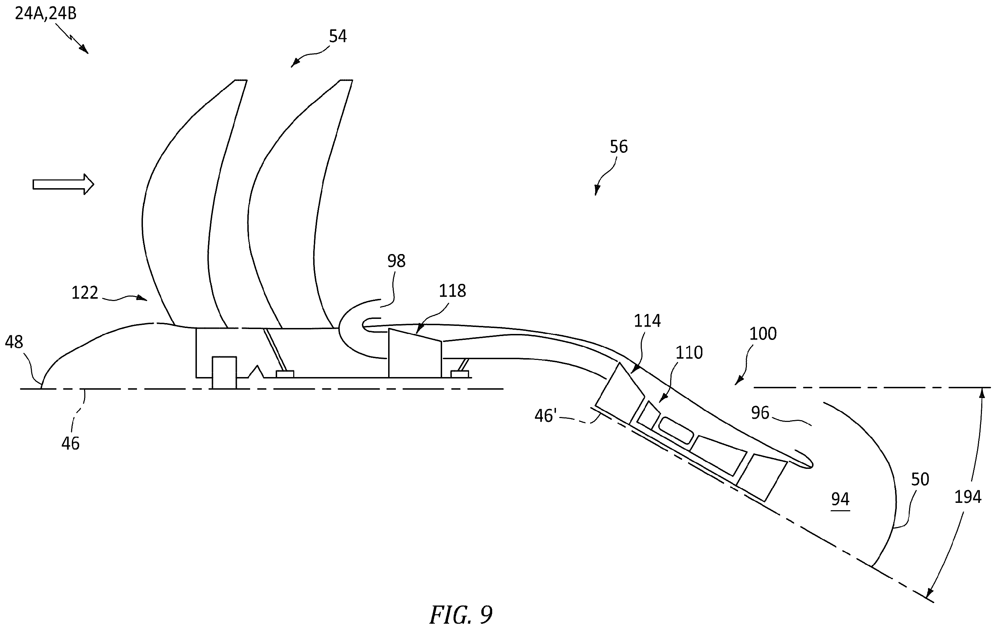

FIG. 7 is a flow diagram of an operating method 700 for an aircraft. For ease of description, the operating method 700 is described below with respect to the aircraft 20, the propulsion systems 24, the sensor systems 176 and the control system 180 described above and shown in FIGS. 1-6. The operating method 700 of the present disclosure, however, is not limited to such exemplary aircraft system arrangements. For example, the operating method 700 may alternatively be performed with the aircraft propulsion system arrangements of FIGS. 9-14 as well as various other aircraft propulsion system arrangements not shown in the drawings of the present disclosure.

In step 702, a first control signal is provided for the first aircraft propulsion system 24A. The first controller 178A, for example, may output the first control signal in response to a first command (e.g., a throttle command) from an operator of the aircraft 20; e.g., an aircraft pilot. This first control signal is generated to control one or more systems of the turbine engine 56 of the first aircraft propulsion system 24A to actuate operation of the respective turbine engine 56 and drive the rotation of the respective propulsor rotor 58. Here, the rotation of the propulsor rotor 58 of the first aircraft propulsion system 24A is driven by the respective turbine engine 56 at a first control signal rate specified by the first control signal. For ease of description, the rotation of the propulsor rotor 58 of the first aircraft propulsion system 24A may be substantially or only powered by the respective turbine engine 56 in response to the first control signal. The PT electric machine 138A may thereby be non-operational or operated as the electric generator. Of course, in other embodiments, it is contemplated the first control signal may also actuate the PT EM controller 140A to operate the PT electric machine 138A as the electric motor to boost the power input for driving the rotation of the respective propulsor rotor 58.

In step 704, a second control signal is provided for the second aircraft propulsion system 24B. The second controller 178B, for example, may output the second control signal in response to a second command (e.g., a throttle command), or the first command, from the aircraft operator. This second control signal is generated to control one or more systems of the turbine engine 56 of the second aircraft propulsion system 24B to actuate operation of the respective turbine engine 56 and drive the rotation of the respective propulsor rotor 58. Here, the rotation of the propulsor rotor 58 of the second aircraft propulsion system 24B is driven by the respective turbine engine 56 at a second control signal rate specified by the second control signal. This second control signal rate may be equal to or different than the first control signal rate. For ease of description, the rotation of the propulsor rotor 58 of the second aircraft propulsion system 24B may be substantially or only powered by the respective turbine engine 56 in response to the second control signal. The PT electric machine 138A may thereby be non-operational or operated as the electric generator. Of course, in other embodiments, it is contemplated the second control signal may also actuate the PT EM controller 140A to operate the PT electric machine 138A as the electric motor to boost the power input for driving the rotation of the respective propulsor rotor 58. Note, while the step 704 is shown in FIG. 7 as being performed subsequent to the step 702, it is contemplated the steps 702 and 704 may be performed concurrently.

In step 706, operation of each aircraft propulsion system 24 is monitored. The first sensor system 176A, for example, monitors operation of the turbine engine 56 of the first aircraft propulsion system 24A using its sensors 184. This first sensor system 176A also provides first engine data indicative of the monitored parameters (e.g., temperature, pressure, rotational speed, etc.) of the turbine engine 56 of the first aircraft propulsion system 24A to the first controller 178A. Similarly, the second sensor system 176B monitors operation of the turbine engine 56 of the second aircraft propulsion system 24B using its sensors 184. This second sensor system 176B also provides second engine data indicative of the monitored parameters (e.g., temperature, pressure, rotational speed, etc.) of the turbine engine 56 of the second aircraft propulsion system 24B to the second controller 178B.

In step 708, the control system 180 processes the first engine data and/or the second engine data to monitor for degraded operation of one or more of the aircraft propulsion systems 24 and their turbine engines 56. For ease of description, this monitoring for the degraded operation is described below with respect to degraded operation of the turbine engine 56 of the first aircraft propulsion system 24A. However, a similar process may also or alternatively be performed for the turbine engine 56 of the second aircraft propulsion system 24B.

To monitor for the degraded operation of the turbine engine 56 of the first aircraft propulsion system 24A, the first controller 178A may process the first engine data to identify anomalies. This processing may be performed using engine model(s), lookup table(s), threshold(s) and/or other processing tools. For example, where the monitored gas temperature(s) and/or the monitored gas pressure(s) for the turbine engine 56 of the first aircraft propulsion system 24A are different (e.g., higher or lower) than expected, the first controller 178A may identify a degraded condition in the respective turbine engine 56. In another example, where the monitored rotational speed(s) are different (e.g., lower) than expected, the first controller 178A may also or alternatively identify the degraded condition in the respective turbine engine 56. Depending on the specific degraded operation of the turbine engine 56 of the first aircraft propulsion system 24A, the degraded condition may indicate the respective turbine engine 56 is operating at a reduced (e.g., 75%, 50%, 25%) capacity. The degraded condition may alternatively indicate the respective turbine engine 56 has failed and may need to be completely shut down to prevent further turbine engine damage and/or aircraft propulsion system damage.

In step 710, in response to identifying the degraded condition, the control system 180 signals one or more of the aircraft propulsion systems 24 to compensate for the degraded condition. For example, where the degraded condition is identified in the turbine engine 56 of the first aircraft propulsion system 24A, the first controller 178A may output a third control signal; e.g., a modified version of the first control signal. This third control signal may initiate derating the operation of the respective turbine engine 56 or depowering (e.g., shutting down) the respective turbine engine 56. The third control signal may also control operation of the PT EM controller 140A to actuate operation of the PT electric machine 138A as the electric motor and drive the rotation of the respective propulsor rotor 58. Here, the rotation of the propulsor rotor 58 of the first aircraft propulsion system 24A is driven by the respective PT electric machine 138A at a third control signal rate specified by the third control signal. For ease of description, the rotation of the propulsor rotor 58 of the first aircraft propulsion system 24A may be substantially or only powered by the respective PT electric machine 138A in response to the third control signal. The turbine engine 56 may thereby be non-operational. Of course, in other embodiments, it is contemplated the third control signal may also actuate the (e.g., derated) turbine engine 56 to boost the power input for driving the rotation of the respective propulsor rotor 58.

The third control signal rate may be equal to or greater than fifty percent (50%) or seventy-five percent (75%) of the originally intended first control signal rate for the first aircraft propulsion system 24A. The third control signal rate may also or alternatively be equal to or greater than fifty percent (50%) or seventy-five percent (75%) of the second control signal rate at which the propulsor rotor 58 of the second aircraft propulsion system 24B is (e.g., currently) being driven. Of course, it is contemplated the third control signal rate may alternatively be about or exactly one-hundred percent (100%) of the originally intended first control signal rate for the first aircraft propulsion system 24A and/or the second control signal rate at which the propulsor rotor 58 of the second aircraft propulsion system 24B is (e.g., currently) being driven. In this manner, the PT electric machine 138A may be operated as a partial or full (e.g., emergency) backup to the respective turbine engine 56 with the degraded condition. Aircraft thrust may thereby be partially or substantially maintained following the identification of the degraded condition. Aircraft thrust may also be relatively balanced laterally across the span of the aircraft 20. This may be particularly beneficial when the aircraft 20 utilizes relatively high levels of thrust, such as during aircraft takeoff and/or initial aircraft climb following the aircraft takeoff.

In some embodiments, in response to identifying the degraded condition, electrical power management to various systems of the aircraft 20 may be modified. For example, routing electrical power from the aircraft electrical system 136 to the respective PT electric machine 138A may be prioritized over routing electrical power to non-essential devices and/or system of the aircraft propulsion systems 24 and/or other aircraft systems. The operational capability of the respective PT electric machine 138A may thereby be effectively boosted during the degraded condition.

In some embodiments, information related to the degraded condition may be presented to the aircraft operator. For example, in response to the identification of the degraded condition in the turbine engine 56 of the first aircraft propulsion system 24A, the control system 180 and its first controller 178A may signal a display 190 (see FIG. 6) and/or another user interface to visually and/or audibly present information to the aircraft operator. This information may indicate that the degraded condition was identified. The information may indicate that the turbine engine 56 associated with the degraded condition is being derated or depowered. The information may indicate the PT electric machine 138A of the first aircraft propulsion system 24A is being operated to drive the rotation of the respective propulsor rotor 58 at the third control signal rate. The information may also indicate the propulsor rotor 58 of the second aircraft propulsion system 24B is being rotated at the second control signal rate. The aircraft operator may thereby be notified of the derated condition as well as understand how thrust balance may be impacted (if at all).

In some embodiments, the third control signal of step 710 may be provided where the first aircraft propulsion system 24A was previously commanded (e.g., just prior to the identification of the degraded condition) to operate at a power setting equal to or greater than a threshold power setting. This threshold power setting, for example, may be seventy percent (70%), eighty percent (80%), ninety percent (90%) or more of a rated power output of the respective turbine engine 56.

In some embodiments, the third control signal of step 710 may be provided where the aircraft 20 is flying at an altitude equal to or less than a threshold altitude. This threshold altitude may be a minimum safe altitude for single engine operation of the aircraft 20; e.g., at about five thousand feet (5000 ft) above ground. By contrast, when the aircraft 20 is flying at or above the threshold altitude, a fourth control signal (e.g., a further modified version of the first control signal) may be provided to facilitate driving the rotation of the propulsor rotor 58 of the first aircraft propulsion system 24A with the respective PT electric machine 138A at a reduced fourth control signal rate that is less than the third control signal rate. For example, as the aircraft 20 climbs above the threshold altitude, the first controller 178A may begin to reduce electric motor power output of the respective PT electric machine 138A and reallocate electrical power distribution as needed to the other aircraft systems. This reduction in the driving rate of the propulsor rotor 58 of the first aircraft propulsion system 24A may be performed slowly such that the aircraft operator has time to adjust flight controls to account for reduced (or eventually no) thrust output from the first aircraft propulsion system 24A. During such a reduction in the driving rate of the propulsor rotor 58 of the first aircraft propulsion system 24A, the propulsor blades 66 may first or concurrently be feathered to reduce windage impact of the respective propulsor rotor 58; e.g., particularly where the degraded first aircraft propulsion system 24A is depowered and the respective propulsor rotor 58 is allowed to windmill. When the rate at which the propulsor rotor 58 of the first aircraft propulsion system 24A is reduced, information of such may be visually and/or audibly presented to the aircraft operator through the display 190 and/or another user interface.

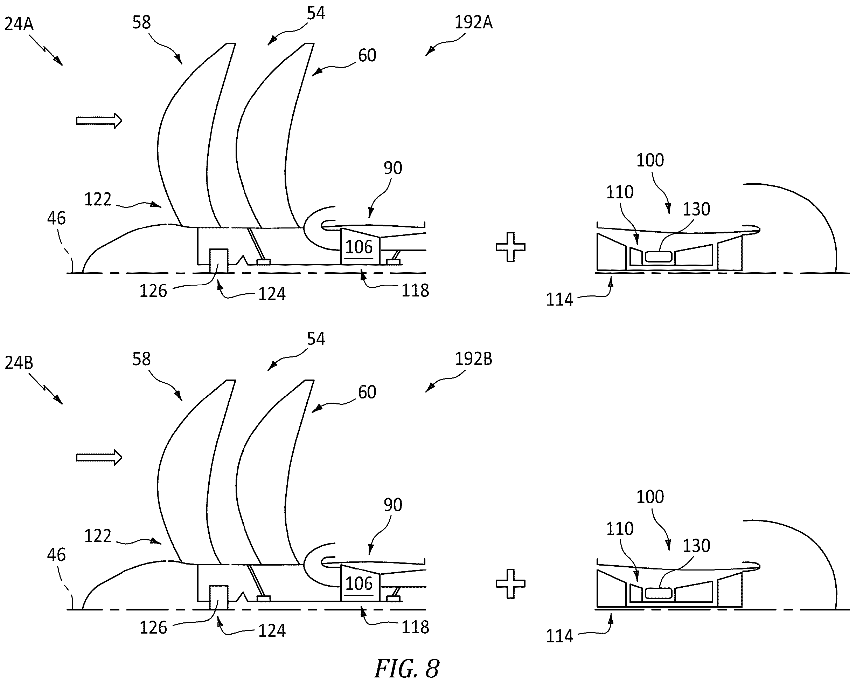

In some embodiments, referring to FIG. 8, each of the aircraft propulsion systems 24A and 24B may be configured with a unique propulsor module 192A, 192B (generally referred to as "192"). This propulsor module 192 may include the respective propulsor rotor 58, the respective PT rotor 106 and the respective drivetrain 124 coupling those propulsion system rotors 58 and 106 together. The propulsor module 192 may (or may not) also include the respective guide vane structure 60 and/or the PT electric machine 138A (see FIG. 5). With such an arrangement, each aircraft propulsion system 24 may be assembled by mating and mounting its propulsor module 192 to the engine core 100. This may also facilitate relatively easy access to the PT electric machine 138A (see FIG. 5) for maintenance where, for example, that PT electric machine 138A is integrated with or concentrically coupled to the PT rotor 106.

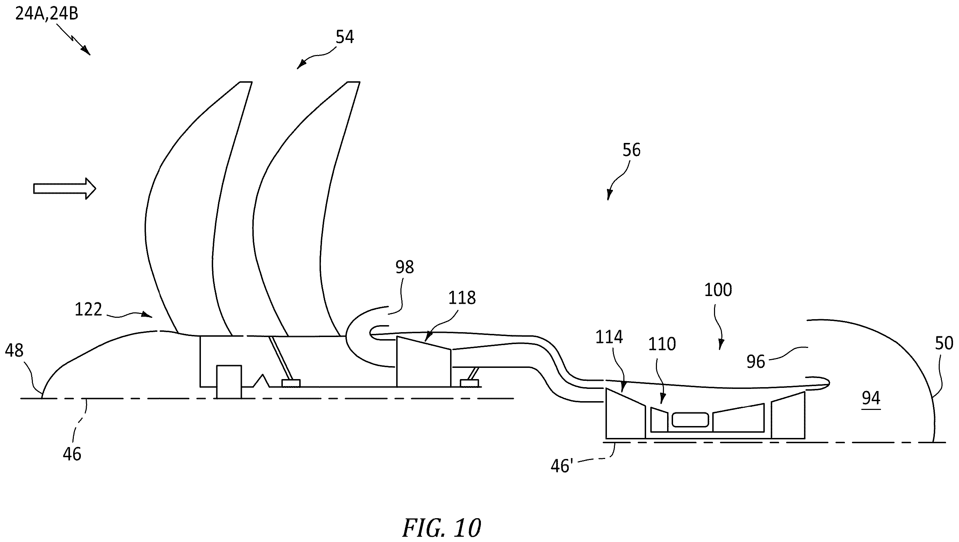

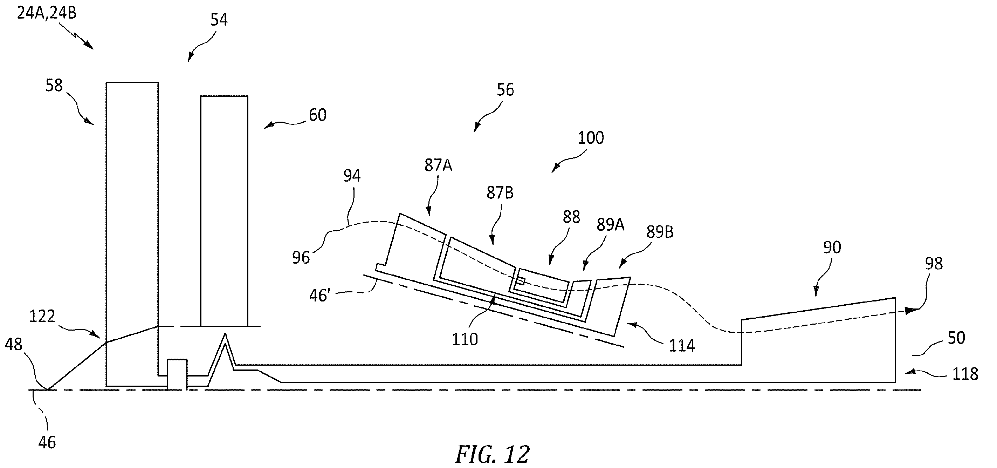

In some embodiments, referring to FIG. 3, each of the propulsion system rotating structures 110, 114, 118 and 122 may be rotatable about a common rotational axis 46; e.g., the propulsion system axis 46. The propulsion system rotating structures 110, 114, 118 and 122 may thereby be coaxial with one another. In other embodiments, referring to FIGS. 9 and 10, a rotational axis 46' of one or more of the core rotating structures 110 and/or 114 may be offset from a rotational axis (e.g., 46) of one or more of the other propulsion system rotating structures 118 and/or 122. Each core rotating structure 110, 114 and its rotational axis 46' of FIG. 9 (see also FIG. 12), for example, is angularly offset from each propulsion system rotating structure 118, 122 and its rotational axis (e.g., 46) by an included angle 194; e.g., a non-zero acute angle. In another example, each core rotating structure 110, 114 and its rotational axis 46' of FIG. 10 is laterally offset from each propulsion system rotating structure 118, 122 and its rotational axis (e.g., 46). Here, each core rotating structure 110, 114 and its rotational axis 46' may (or may not) be parallel with each propulsion system rotating structure 118, 122 and its rotational axis (e.g., 46).

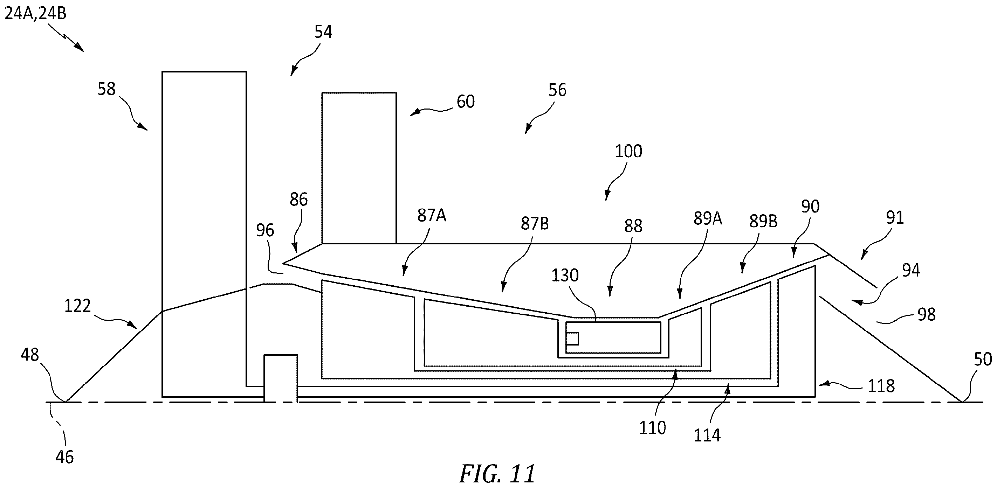

In some embodiments, referring to FIGS. 3, 9 and 10, the turbine engine 56 may have a reverse flow engine arrangement. With such an arrangement, the engine flowpath 94 is configured such that the core air and the combustion products generally flow in a forward, upstream direction towards the propulsion system forward end 48. The core air and the combustion products may thereby flow in an opposite direction as the ambient air propelled by the rotating propulsor rotor 58. In other embodiments, referring to FIGS. 11 and 12, the engine flowpath 94 may be configured such that the core air and the combustion products generally flow in an aft, downstream direction towards the propulsion system aft end 50. The core air and the combustion products may thereby flow in a common axial direction - the downstream, aft direction - as the ambient air propelled by the rotating propulsor rotor 58. With such an arrangement, the engine core 100 and its engine sections 87A-89B may be arranged axially along the propulsion system axis 46 between (a) the propulsion section 54 or at least its propulsor rotor 58 and (b) the PT section 90. Here too, the inlet section 86 is disposed axially forward of the exhaust section 91 as shown in FIG. 11.

Each aircraft propulsion system 24 is described above as including an electric machine coupled to each turbine section 89A, 89B, 90. The present disclosure, however, is not limited to such an exemplary arrangement. For example, each aircraft propulsion system 24 may be configured with a single electric machine (e.g., coupled to the PT section 90), or with two electric machines (e.g., one coupled to the PT section 90 and one coupled to the HPT section 89A or IPT section 89B).

Referring to FIG. 3, each propulsion section 54 is described above with a tractor configuration; e.g., where the propulsor rotor 58 is disposed at or otherwise near the propulsion system forward end 48. It is contemplated, however, the propulsion section 54 may alternatively be disposed at or otherwise near the propulsion system aft end 50 to provide a pusher fan configuration.

Each guide vane structure 60 is described above as a fixed (e.g., non-rotatable) guide vane structure. It is contemplated, however, the guide vane structure 60 may alternatively be selectively rotatable about the propulsion system axis 46. With such an arrangement, the respective aircraft propulsion system 24 may be configured as an open rotor propulsion system with a swirl recovery blade (SRB) open rotor architecture. More particularly, the respective aircraft propulsion system 24 may operate as: (A) a counter-rotating open rotor (CROR) propulsion system during a dual rotor mode of operation (e.g., when both the propulsor rotor 58 and the structure 60 are counter-rotating about the propulsion system axis 46); and (B) a single open rotor and swirl recovery vane (SRV) propulsion system during a single rotor mode of operation (e.g., when the propulsor rotor 58 is rotating and the structure 60 is rotationally fixed about the propulsion system axis 46). Note, when the guide vane structure 60 is configured to selectively rotate about the propulsion system axis 46, the moving guide vanes 74 operate as propulsor blades 66.

Each aircraft propulsion system 24 is described above as including the propulsor rotor 58 paired with the guide vane structure 60. The present disclosure, however, is not limited to such an exemplary propulsion system configuration. For example, it is contemplated each aircraft propulsion system 24 may be configured as a single rotor (SR) open rotor propulsion system without the guide vane structure 60. In another example, it is contemplated each aircraft propulsion system 24 may be configured as a counter-rotating open rotor (CROR) propulsion system where the guide vane structure 60 is replaced by another open propulsor rotor which may also be powered by the respective power turbine rotating structure 118 or otherwise.

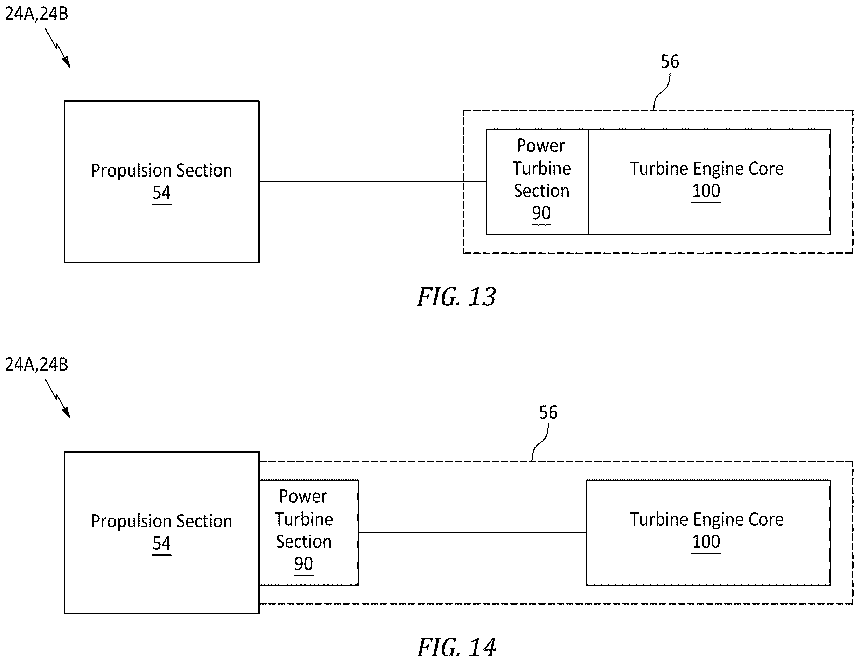

Each aircraft propulsion system 24 is described above with its propulsion section 54 being arranged in close proximity to its turbine engine 56 and its engine core 100. The present disclosure, however, is not limited to such an exemplary arrangement. For example, referring to FIG. 13, the turbine engine 56 may be disposed remote from the propulsion section 54. In another example, referring to FIG. 14, the PT section 90 may be arranged in close proximity to propulsion section 54, while the engine core 100 may be disposed remote from the propulsion section 54 and the PT section 90. Of course, various other arrangements are possible and contemplated by the present disclosure.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An aircraft system, comprising:
an open propulsor rotor (58);
a turbine engine (56) including a core compressor section (87), a core combustor section (88), a core turbine section (89), a power turbine section (90), a flowpath (94), a first core rotating structure (110) and a power turbine rotating structure (118);
the flowpath extending through the core compressor section, the core combustor section, the core turbine section and the power turbine section from an inlet (96) into the flowpath to an exhaust (98) from the flowpath;
the first core rotating structure including a first core compressor rotor (103) and a first core turbine rotor (104), the first core compressor rotor disposed in the core compressor section, and the first core turbine rotor disposed in the core turbine section;
the power turbine rotating structure configured to drive rotation of the open propulsor rotor, and the power turbine rotating structure comprising a power turbine rotor (106) disposed in the power turbine section;
a power turbine electric machine (138) operatively coupled to the power turbine rotating structure;
a first core electric machine (138) operatively coupled to the first core rotating structure; and
an electrical system (136) electrically coupled to and configured to transfer electrical power between the power turbine electric machine and the first core electric machine.

2. The aircraft system of claim 1, wherein, during at least one mode of operation:
the power turbine electric machine is configured as an electric generator;
the first core electric machine is configured as an electric motor operable to provide mechanical power to the first core rotating structure; and
the electrical system is configured to transfer the electrical power from the electric generator to the electric motor.

3. The aircraft system of claim 1, wherein, during at least one mode of operation:
the power turbine electric machine is configured as an electric motor configured to provide mechanical power to the open propulsor rotor;
the first core electric machine is configured as an electric generator; and
the electrical system is configured to transfer the electrical power from the electric generator to the electric motor.

4. The aircraft system of claim 1, 2 or 3, wherein:
the turbine engine further includes a second core rotating structure (114);
the second core rotating structure includes a second core compressor rotor (102) and a second core turbine rotor (105);
the second core compressor rotor disposed in the core compressor section;
the second core turbine rotor disposed in the core turbine section.

5. The aircraft system of claim 4, wherein at least one of:
the second core compressor rotor is disposed between the first core compressor rotor and the core combustor section along the flowpath; and/or
the second core turbine rotor is disposed between the first core turbine rotor and the core combustor section along the flowpath.

6. The aircraft system of claim 4, wherein at least one of:
the first core compressor rotor is disposed between the second core compressor rotor and the core combustor section along the flowpath; and/or
the first core turbine rotor is disposed between the second core turbine rotor and the core combustor section along the flowpath.

7. The aircraft system of any preceding claim, further comprising:
a clutch (153) configured to selectively operatively couple the power turbine electric machine and the power turbine rotating structure; and/or
a clutch (153) configured to selectively operatively couple the first core electric machine and the first core rotating structure.

8. The aircraft system of any preceding claim, wherein:
the open propulsor rotor is rotatable about an axis (46), and the power turbine rotor is located axially between the open propulsor rotor and the first core turbine rotor along the axis; or
the open propulsor rotor is rotatable about an axis (46), and the first core turbine rotor is located axially between the open propulsor rotor and the power turbine rotor along the axis.

9. The aircraft system of any preceding claim, wherein:
the open propulsor rotor is coaxial with the power turbine rotor; and/or
the open propulsor rotor is coaxial with the first core turbine rotor.

10. The aircraft system of any preceding claim, wherein:
the open propulsor rotor is rotatable about a propulsor axis (46); and
the first core turbine rotor is rotatable about a core axis (46') that is angularly offset from the propulsor axis.

11. The aircraft system of any preceding claim, wherein:
the open propulsor rotor is rotatable about a propulsor axis (46); and
the first core turbine rotor is rotatable about a core axis (46') that is laterally offset from the propulsor axis.

12. The aircraft system of any preceding claim, further comprising an open guide vane structure (60) axially next to the open propulsor rotor.

13. The aircraft system of any preceding claim, further comprising a geartrain (126) operatively coupling the power turbine rotor to the open propulsor rotor.

14. An aircraft system, comprising:
an open propulsor rotor (58);
a turbine engine (56) including a core compressor section (87), a core combustor section (88), a core turbine section (89), a power turbine section (90), a flowpath (94), a first core rotating structure (110), a second core rotating structure (114) and a power turbine rotating structure (118);
the flowpath extending through the core compressor section, the core combustor section, the core turbine section and the power turbine section from an inlet (96) into the flowpath to an exhaust (98) from the flowpath;
the first core rotating structure including a first core compressor rotor (103) and a first core turbine rotor (105), the first core compressor rotor disposed in the core compressor section, and the first core turbine rotor disposed in the core turbine section;
the second core rotating structure including a second core compressor rotor (102) and a second core turbine rotor (105), the second core compressor rotor disposed in the core compressor section, and the first core turbine rotor disposed in the core turbine section;
the power turbine rotating structure configured to drive rotation of the open propulsor rotor, and the power turbine rotating structure comprising a power turbine rotor (106) disposed in the power turbine section; and
a power turbine electric machine (138) operatively coupled to the power turbine rotating structure, wherein, optionally:
the power turbine electric machine is configured as a motor-generator; and/or
the aircraft system further comprises:
a core electric machine operatively coupled to the first core rotating structure or the second core rotating structure; and
an electrical system electrically coupled to and configured to transfer electrical power between the power turbine electric machine and the core electric machine.

15. An aircraft system, comprising:
an open propulsor rotor (58);
an open guide vane structure (60) next to the open propulsor rotor;
a turbine engine (56) including a core compressor section (87), a core combustor section (88), a core turbine section (89), a power turbine section (90), a flowpath (94), a first core rotating structure (110) and a power turbine rotating structure (118);
the flowpath extending through the core compressor section, the core combustor section, the core turbine section and the power turbine section from an inlet (96) into the flowpath to an exhaust (98) from the flowpath;
the first core rotating structure including a first core compressor rotor (103) and a first core turbine rotor (104), the first core compressor rotor disposed in the core compressor section, and the first core turbine rotor disposed in the core turbine section;
the power turbine rotating structure configured to drive rotation of the open propulsor rotor, and the power turbine rotating structure comprising a power turbine rotor (106) disposed in the power turbine section; and
a power turbine electric machine (138) operatively coupled to the power turbine rotating structure.
